# EUROPEAN PATENT APPLICATION

(11) **EP 3 406 143 A1**
(43) Date of publication of application: **28.11.2018**
(21) Application number: 17741400.0
(22) Date of filing: 18.01.2017
(51) Int. Cl.: A23L 19/00, A23L 7/109, A23L 11/00, A23L 29/20, A23L 33/00

(54) **NOODLE-LIKE FOOD PRODUCT AND METHOD FOR MANUFACTURING SAME**

(30) Priority: 19.01.2016 JP 2016008051
(71) Applicant: Fuji Oil Holdings Inc., Osaka 598-8540 (JP)
(72) Inventor: AZUCHI, Mai, Tokyo 108-6323 (JP)
(74) Representative: Becker Kurig Straus
(86) International application number: PCT/JP2017/001470
(87) International publication number: WO 2017/126523

(57) **Abstract**

The purpose of the present invention is to overcome the problems of the prior art and to provide a low-calorie noodle-like food product that can be used as a diet food product and has a quality similar to that of noodles made from wheat flour. A noodle-like food product characterized in that at least noodle strands are formed by a thermally irreversible polysaccharide gel, and insoluble dietary fiber and soy milk cream are included in the noodle strands.

## Description

### [Technical Field]

The present disclosure relates to a noodle-like food product. More specifically, the present disclosure relates to particularly a low-calorie noodle-like food product having a texture close to that of general noodles such as pasta which is made from wheat flour as a raw material.

### [Background Art]

According to the rise in health consciousness, in other countries including Italy, thin thread-like konnyaku (so-called "shirataki") is referred to as a "zenpasta" and eating this for the purpose of dieting is a popular trend. Also in Japan, the market for noodle-like food products using thermally irreversible polysaccharide gels such as konnyaku noodles is expanding and pasta types thereof are also available.

Several methods for manufacturing noodles using konnyaku have been proposed. For example, Patent Literature 1 proposes seasoned konnyaku noodles for dieting obtained when a calcium hydroxide aqueous solution is added to konnyaku paste prepared by kneading together konnyaku powder and a seasoning raw material, and the mixture is additionally kneaded, and formed into a thread shape, and heated with hot water at 95°C or higher. Thus, konnyaku noodles with a low-calorie content, high nutritional value of vitamins and minerals rather than calories, and a favorable flavor are obtained.

Patent Literature 2 proposes konnyaku noodles that are manufactured when an alkaline coagulant is added to konnyaku paste containing konnyaku powder, rice flour and cellulose powder, the mixture is formed into noodle shapes, and a special manufacturing process is additionally performed. Thus, konnyaku noodles having a noodle-like stiffness and texture are obtained.

### [Citation List]

### [Patent Literature]

[Patent Literature 1] Japanese Unexamined Patent Application Publication No. 2007-49912
[Patent Literature 2] Japanese Unexamined Patent Application Publication No. 2008-306951

### [Summary of Invention]

### [Technical Problem]

However, current konnyaku noodle products still remain in the image of konnyaku. Current konnyaku noodles give low satisfaction because a texture thereof is soft without stiffness and they have a light flavor with little depth of flavor. In addition, when cooked as pasta, since there is too much water in the konnyaku noodles, there is a problem that water migrates into the pasta sauce and the pasta sauce becomes watery. There is also a problem that palatability deteriorates due to the strikingness of the unique konnyaku smell.

In order to address the above problems, an objective of the present disclosure is to provide a low-calorie noodle-like food product that has a quality close to that of noodles made from wheat flour as a raw material and can be used as a diet food product.

### [Solution to Problem]

The inventors conducted extensive studies and as a result, found that it is possible to address the above problems by including insoluble dietary fibers and a soy milk cream in noodle strands formed by a thermally irreversible polysaccharide gel, and completed the present disclosure.

That is, the present disclosure includes the following aspects.
(1) A noodle-like food product in which at least noodle strands are formed by a thermally irreversible polysaccharide gel,
   wherein insoluble dietary fibers and a soy milk cream are contained in the noodle strands.
(2) The noodle-like food product according to (1),
   wherein a raw material of the thermally irreversible polysaccharide gel is konnyaku or glucomannan.
(3) The noodle-like food product according to (1) or (2),
   wherein the insoluble dietary fibers are okara.
(4) The noodle-like food product according to any one of (1) to (3),
   wherein a lipid/protein ratio of the soy milk cream is 1 or more in terms of mass.
(5) The noodle-like food product according to any one of (1) to (4),
   wherein the noodle-like food product is a pasta-like food product.
(6) A method of manufacturing a noodle-like food product comprising:
   a) a process of mixing together polysaccharides which form a thermally irreversible gel, a soy milk cream, insoluble dietary fibers and water;
   b) a process of mixing the mixture and an alkali to form a coagulated product;
   c) a process of molding the coagulated product to form noodle strands; and
   d) a process of boiling the noodle strands to form a thermally irreversible polysaccharide gel.
(7) The method of manufacturing a noodle-like food product according to (6),
   wherein the process a) is performed by a process of mixing in insoluble dietary fibers after the polysaccharides, the soy milk cream and water are mixed together and become a jelly-like mixture.
(8) The method of manufacturing a noodle-like food product according to (7),
   wherein the polysaccharides, the soy milk cream and water are mixed together with foaming.
(9) The method of manufacturing a noodle-like food product according to (7),
   wherein the polysaccharides, the soy milk cream and water are mixed together without foaming.
(10) The method of manufacturing a noodle-like food product according to any one of (6) to (9),
   wherein a mixing ratio between the insoluble dietary fibers and the polysaccharides is 1:99 to 20:80 in terms of mass.
(11) The method of manufacturing a noodle-like food product according to any one of (6) to (10),
   wherein the noodle strands are colored to a yellowish color through coloring processing into pasta forms.
(12) The method of manufacturing a noodle-like food product according to any one of (6) to (11),
   wherein the noodle-like food product is of a chilled type obtained by providing a process of frying the noodle strands using oil after the d) process.
(13) The method of manufacturing a noodle-like food product according to any one of (6) to (11),
   wherein the noodle-like food product is of a chilled type obtained by providing a process of washing with water and additionally performing frying after the noodle strands are fried using oil after the d) process.
(14) The method of manufacturing a noodle-like food product according to any one of (6) to (11),
   wherein the noodle-like food product is of a frozen type obtained by providing a process of freezing the noodle strands after the d) process.

### [Advantageous Effects of Invention]

According to the present disclosure, it is possible to impart a stiff texture to current konnyaku noodles and particularly, it is possible to impart an "al dente feeling caused by gluten formation" felt in wheat flour pasta. In addition, according to the present disclosure, when a pasta sauce is added to a noodle-like food product and consumed, migration of water from konnyaku is prevented and it is possible to prevent a flavor of the pasta sauce from becoming watery. In addition, it is possible to mask the smell unique to konnyaku and it is possible to obtain a satisfactory noodle-like food product to which a rich flavor derived from grains such as wheat flour pasta is particularly imparted. In addition, as another effect, there is no need to use egg that is used as a material for combining noodles.

### [Brief Description of Drawings]

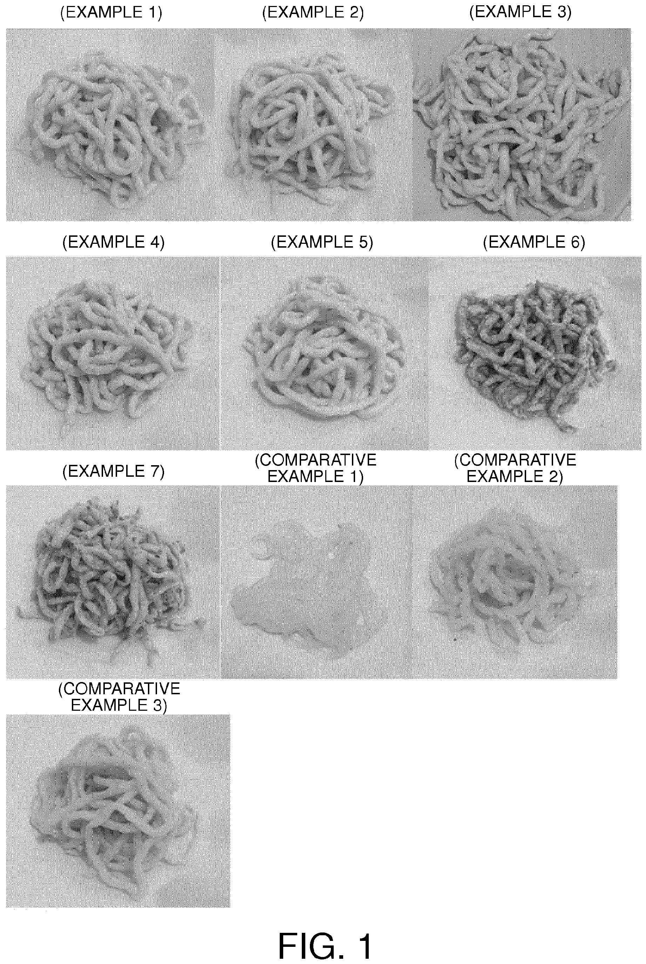

FIG. 1 shows photographs obtained by imaging noodle strands of pasta-like food products obtained in Examples 1 to 7 and Comparative Examples 1 to 4, instead of drawings.

### [Description of Embodiments]

In a noodle-like food product of the present disclosure, at least noodle strands are formed by a thermally irreversible polysaccharide gel, and insoluble dietary fibers and a soy milk cream are contained in the noodle strands. A noodle-like food product according to an embodiment of the present disclosure will be described below in detail.

### (Noodle-like food product)

The term "noodle-like food product" of the present disclosure refers to a food product having the same appearance as general noodles mainly containing grain flour such as wheat flour or rice flour as a raw material. Examples of noodles include pasta, Chinese noodles, udon, soba, hiyamugi, somen, macaroni, lagman, rice vermicelli, quitiao, and pho. In the noodle-like food product of the present disclosure, a pasta-like food product is particularly preferable in consideration of texture.

The noodle-like food product may be of any product type such as a raw noodle type, a boiled noodle type, a frozen noodle type, a fried noodle type, a dried noodle type, and a freeze-dried noodle type.

### (Thermally irreversible polysaccharide gel)

In the noodle-like food product of the present disclosure, a structure of noodle strands is formed by a thermally irreversible polysaccharide gel. As raw material polysaccharide for forming the thermally irreversible polysaccharide gel or a material containing the polysaccharide, konnyaku powder and its main component glucomannan, curdlan, alginic acid, alginate, low methoxyl pectin, locust bean gum, sodium hyaluronate, and gellan gum may be exemplified. Among these, in particular, when a noodle-like food product is made into a wheat flour pasta form, konnyaku powder and glucomannan obtained by refining this are preferable in consideration of the strength of the elasticity and stiffness that can be imparted.

### (Soy milk cream)

According to an aspect of the noodle-like food product of the present disclosure, a soy milk cream is contained in the noodle strands.

The soy milk cream has a higher lipid content than soy milk and can be called a "soybean emulsion component." Generally, fresh cream is produced from milk using a centrifugal separator. However, in an aspect, similarly, for example, a soy milk cream obtained by recovering a cream layer with a low specific gravity and a rich oil content produced by additionally centrifuging soy milk obtained from round soybeans can be used, but the production method therefor is not particularly limited. As another aspect, a soybean emulsion component obtained by adding commercially available soy milk, oils and fats, and an emulsifier as necessary can also be contained in noodle strands. In this case, a soy milk cream can be prepared in advance in a step of mixing raw materials together. However, such a process is not necessary. As long as the effects of the present disclosure are exhibited, in the step of mixing raw materials together, for example, when soy milk and oils and fats are mixed together with other raw materials such as thermally irreversible polysaccharides and insoluble dietary fibers, the same composition as when a soy milk cream is added after mixing may be obtained.

A lipid content of the soy milk cream in a dried state has a lower limit that is preferably 35 mass% or more and more preferably 40 mass% or more. In addition, the upper limit is preferably 75 mass% or less and more preferably 70 mass% or less. In addition, a protein content of the soy milk cream in a dried state is preferably 15 mass% or more and more preferably 20 mass% or more. In addition, the upper limit is preferably 40 mass% or less and more preferably 35 mass% or less. A lipid/protein content ratio of the soy milk cream is preferably 100 mass% or more and more preferably 120 mass% or more.

As another preferable aspect of the soy milk cream, a soy milk cream in which a "lipophilic protein" of soy proteins is enriched is preferable because it has more richness and has a favorable flavor derived from soybeans. As such a soybean protein raw material, for example, a soybean emulsion component described in Japanese Unexamined Patent Application Publication No. 2012-16348 can be used. An index indicating whether a lipophilic protein is enriched can be estimated by obtaining an LCI value (lipophilic proteins content index) in the literature. In the present disclosure, more preferably, a soy milk cream in which a lipophilic protein is enriched and which has an LCI value that is 50% or more, and preferably 55% or more can be used. As a commercially available soy milk cream having an LCI value of 55% or more, for example, "KO-CREME" (registered trademark, commercially available from Fuji Oil Co., Ltd.) can be used.

### (Insoluble dietary fibers)

According to an aspect of the noodle-like food product of the present disclosure, insoluble dietary fibers are contained in the noodle strands. When insoluble dietary fibers are contained, it is possible to realize high density noodle strands with an al dente texture. Examples of the insoluble dietary fibers include okara of beans such as soybean, chitosan, cellulose, hemicellulose, sodium carboxymethyl cellulose, glucan, lignin, wheat bran, wheat germ, oatmeal, and cornmeal. Among them, okara is preferable because it has particularly favorable compatibility with a soy milk cream and has a favorable flavor.

Here, when okara is used for the insoluble dietary fibers, okara generated as a by-product when general soy milk or an isolated soybean protein is produced can be used.

In addition, okara that is separated when the soy milk cream is manufactured or an okara-containing soy milk cream from before okara is separated from the soy milk cream can be used. Thereby, noodle strands have a soft texture and additionally, it is possible to reduce the unique smell sensed when general okara is used, and it is possible to obtain a noodle-like food product with a preferable flavor close to that of wheat flour pasta.

Next, a method of manufacturing a noodle-like food product according to the present disclosure will be described. A method of manufacturing a noodle-like food product according to an aspect of the present disclosure includes a) a process of mixing together polysaccharides which form a thermally irreversible gel, a soy milk cream, insoluble dietary fibers and water, b) a process of mixing this admixture and an alkali to form a coagulated product, c) a process of extruding and molding the coagulated product to form noodle strands, and d) a process of boiling the noodle strands to form a thermally irreversible polysaccharide gel. This manufacturing method will be described below in detail.

### a) Process of mixing raw materials

Polysaccharides which form a thermally irreversible gel, a soy milk cream, insoluble dietary fibers and water are mixed together. The order of mixing in these raw materials is not particularly limited. However, a preferable order is that the polysaccharides, a soy milk cream and water are mixed and kneaded until the mixture become jelly-like and then insoluble dietary fibers are mixed into the kneaded mixture. When the polysaccharides, a soy milk cream and water are mixed, the mixing may be performed while foaming with strong stirring using a whisk or mixing may be performed with gentle stirring without foaming. In a mode in which no foaming occurs, a noodle-like food product having a stronger al dente feeling is obtained. In this case, a mixing ratio between the insoluble dietary fibers and the polysaccharides is preferably 1:99 to 20:80 and more preferably 2:98 to 10:90 in terms of mass.

### b) Process of forming coagulated product

A coagulated product is formed by mixing the mixture obtained in the a) process and an alkali. After the mixing, when the mixture is left for about 3 to 5 minutes, physical properties of the coagulated product are determined, the elasticity (konnyaku quality) of the polysaccharide gel becomes stronger, and stiffness in noodle strands is exhibited. An alkali is preferably mixed in in a liquid state. Examples of the alkali include hydroxides of divalent metal ions such as calcium and magnesium. Generally, calcium hydroxide is preferable.

### c) Process of forming noodle strands

Noodle strands are formed by molding the coagulated product obtained in the b) process. A molding method is not particularly limited. An appropriate molding method can be selected according to a type of a noodle-like food product to be obtained. For example, an extrusion method may be used in order to obtain a pasta-like food product, and a cutting method may be used in order to obtain a Chinese noodle-like food product or an udon-like food product.

### d) Heating and gelling process

The noodle strands obtained in the c) process are boiled to form a thermally irreversible polysaccharide gel in the noodle strands. A boiling time can be appropriately adjusted and, maybe, for example, 1 to 10 minutes.

### (Coloring processing)

In the noodle-like food product of the present disclosure, noodle strands are colored to a yellowish color through coloring processing into pasta or Chinese noodle forms. For example, in the process a), a yellow pigment may be added as another raw material, a yellow color may be imparted to the noodle strands, and coloring processing can be performed to a color tone of pasta or Chinese noodle forms. As the yellow pigment, coloring agents such as marigold and gardenia can be used. In addition, as a method in which no pigment is used, for example, the noodle strands obtained in the c) process may be boiled together with onion and thus coloring processing can be performed.

### (Seasoning processing)

In the process a), seasoning processing can be appropriately performed by adding a flavoring agent or a seasoning raw material as another raw material in order to obtain a desired flavor. Examples of the seasoning raw material include sugars, salts such as table salt, an acidulant, a seasoning material such as powdered soup, and processed oils and fats such as butter.

### (Chilling processing)

In the noodle-like food product of the present disclosure, after the d) process, the noodle strands may be fried in oil, and thus can be processed into a chilled type noodle-like food product. Furthermore, after the d) process, the noodle strands may be fried in oil, and washing with water may then be performed and another frying process can be added.

When the noodle strands are fried in oil in this manner, the noodle strands are coated with oils and fats to prevent the noodle strands from sticking to each other, and noodle surfaces can be tightened for a firmer texture. Then, washing with water is performed, and additionally the noodle strands are slightly fried in oil to an extent at which water is evaporated and thus oiliness can be reduced. Thus, the noodle strands can be processed into a chilled type noodle-like food product with less stickiness of noodle strands and with a favorable texture.

### (Freezing processing)

In the noodle-like food product of the present disclosure, a process of freezing the noodle strands after the d) process can be added. Thereby, they can be processed into a frozen type noodle-like food product.

### Examples

Embodiments of the present disclosure will be described below in further detail with reference to examples and the like. Hereinafter, "%" and "parts" refer to "mass%" and "parts by mass" unless otherwise specified.

### (Example 1)

As a soy milk cream, "KO-CREME" (commercially available from Fuji Oil Co., Ltd., solid content: 20%, protein content: 5.5%, oils and fats/protein ratio: 2.2 in terms of mass) was used. As a dried okara, a product obtained by drying an okara as a by-product from manufacture of tofu was used.

90 parts of hot water, 30 parts of a soy milk cream and 0.1 parts of a yellow pigment for powered food were added to 5 parts of konnyaku powder as a thermally irreversible polysaccharide gel and mixed together while foaming using a whisk until the mixture became jelly-like. After the mixture was left for 1 hour, 5 parts of a dried okara as insoluble dietary fibers was added to 125 parts of the mixture, and mixed using a rubber spatula. Then, 25 parts of a calcium hydroxide solution (solution of water:calcium hydroxide=1:100 (mass ratio)) was added thereto and quickly kneaded up with a rubber spatula and the mixture was then aged for about 3 to 5 minutes, and thereby a coagulated product was formed.

Next, the coagulated product was molded in an extrusion noodle making device and boiled with boiling water. After the coagulated product was boiled, water was removed and frying in oil was performed using a frying pan to which olive oil was added, water was supplied in order to drop the oil, and additionally, frying was performed until water was slightly removed. The obtained noodle strands were refrigerated to obtain a wheat flour pasta-like noodle-like food product.

### (Example 2) Manner of mixing raw materials was changed

A noodle-like food product was obtained in the same manner as in Example 1 except that a rubber spatula was used in place of a whisk in Example 1 in order to mix konnyaku powder, hot water and a soy milk cream, and mixing was performed without foaming.

### (Example 3) Type of okara was changed

A noodle-like food product was obtained in the same manner as in Example 1 except that 5 parts of a product obtained by drying an okara (obtained from Fuji Oil Co., Ltd.) as a by-product from manufacture of a soy milk cream was added in place of 5 parts of the dried okara added in Example 1.

### (Comparative Example 1) Thin thread-like konnyaku

Commercially available thread-like konnyaku (so-called "Shirataki") made from konnyaku powder and calcium hydroxide as raw materials was prepared and subjected to the following quality evaluation.

### (Comparative Example 2) Soy milk cream was not used

A noodle-like food product was obtained in the same manner as in Example 1 except that the total amount of hot water was 120 parts in place of 30 parts of the soy milk cream added in Example 1.

### (Comparative Example 3) Soy milk cream was replaced with general soy milk

A noodle-like food product was obtained in the same manner as in Example 1 except that 30 parts of commercially available soy milk was added in place of 30 parts of the soy milk cream added in Example 1. In the commercially available soy milk, a solid content was 9%, a protein content was 4.7%, and oils and fats/protein ratio was 0.66 in terms of mass.

### (Comparative Example 4) Insoluble dietary fibers were not used

A noodle-like food product was obtained in the same manner as in Example 1 except that 5 parts of the dried okara in Example 1 was not added.

### (Example 4) Change 1 of type of insoluble dietary fibers

A noodle-like food product was obtained in the same manner as in Example 1 except that 5 parts of oatmeal was added in place of 5 parts of the dried okara added in Example 1.

### (Example 5) Change 2 of type of insoluble dietary fibers

A noodle-like food product was obtained in the same manner as in Example 1 except that 5 parts of cornmeal was added in place of 5 parts of the dried okara added in Example 1.

### (Example 6) Change 3 of type of insoluble dietary fibers

A noodle-like food product was obtained in the same manner as in Example 1 except that 5 parts of wheat germ was added in place of 5 parts of the dried okara added in Example 1.

### (Example 7) Change 4 of type of insoluble dietary fibers

A noodle-like food product was obtained in the same manner as in Example 1 except that 5 parts of wheat bran was added in place of 5 parts of the dried okara added in Example 1.

### (Test Example 1) Quality evaluation test of noodle strands

The noodle-like food products obtained in Examples 1 to 7 and Comparative Examples 1 to 5 were subjected to sensory evaluation using a texture (stiffness in noodles), mouthfeel (mellowness), a flavor, and satisfaction during eating as evaluation items. Evaluation criteria were as follows.
A: very good, B: good, C: allowable range, D: slightly poor, E: poor

Then, evaluation was performed in five stages, and C or higher was determined to be satisfactory.

The texture was evaluated as "very good" when stiffness was exhibited and an al dente feeling was strongly felt.

The mouthfeel was evaluated as "very good" when mellowness was strongly felt.

The flavor was evaluated as "very good" when the konnyaku smell was reduced and a flavor close to that of wheat flour pasta was felt.

The satisfaction during eating was evaluated as "very good" when the above three evaluation items were summed and high satisfaction similar to that of wheat flour pasta was obtained during eating.

The evaluation results are summarized in Table 1. In addition, appearance photographs of the noodle-like food products obtained in Examples 1 to 7 and Comparative Examples 1 to 4 are shown in FIG. 1.

**(Table 1) Quality evaluation results of noodle strands**

| | Textu re (stiffn ess) | Mout hfeel | Flavo r | Satisfacti on during eating | Consideration |
|---|---|---|---|---|---|
| Example 1 | A | B | A | A | The texture was close to that of fresh pasta, an al dente feeling, flavor, and satisfaction degree were high, most favorable |
| Example 2 | B | B | A | A | The texture was close to that of dried type pasta, and an al dente feeling was slightly stronger than in Example 1. Worth eating. |
| Example 3 | B | A | A | A | Soybean smell was particularly reduced compared to Examples 1 and 2. Mellowness was felt and mouthfeel was favorable, but the texture was soft and weak |
| Example 4 | B | B | C | B | Favorable, similar to Examples 1 to 3. However, mouthfeel was finished too mellow. For the flavor, compatibility between oatmeal and konnyaku was not better than compatibility between okara and konnyaku. |
| Example 5 | A | B | C | A | Favorable, similar to Examples 1 to 3. The texture was favorable and satisfying, but for the flavor, compatibility between cornmeal and konnyaku was not better than compatibility between okara and konnyaku. |
| Example 6 | B | C | C | C | Favorable, similar to Examples 1 to 3. The stiffness and an al dente feeling were felt, but the texture of germ was little rough. Mouthfeel was finished too mellow. For the flavor, compatibility between germ and konnyaku was not better than compatibility between okara and konnyaku. In addition, the color tone of noodles was dark. |
| Example 7 | B | C | C | C | Favorable, similar to Examples 1 to 3. The stiffness and an al dente feeling were felt, but the texture caused by bran fibers was slightly poor. The flavor was not favorable to okara. In addition, the color tone of noodles was slightly dark. |
| Comparative Example 1 | E | E | E | E | The flavor was light, the konnyaku smell was strong, and it was not favorable. The texture was soft without stiffness. Satisfaction was low and unsatisfactory. In addition, the color tone of noodles was translucent and did not seem like pasta. |
| Comparative Example 2 | B | E | D | D | An al dente texture derived from a solid content was felt. However, for mouthfeel, mellowness was not enough, and it was unsatisfactory. |
| Comparative Example 3 | B | D | D | D | Because soy milk was contained, mouthfeel had a mellow flavor. However, compared to examples, a rich flavor was clearly unsatisfactory. |
| Comparative Example 4 | E | B | B | C | Because a soy milk cream was contained, satisfaction increased with a mellow flavor, but the stiffness and an al dente feeling were lacking. |

As summarized above, when three raw materials including konnyaku powder which forms a thermally irreversible polysaccharide gel, a soy milk cream and insoluble dietary fibers were combined, unlike completely different from conventional konnyaku pasta, it was found that a texture close to that of wheat flour pasta, that is, an al dente feeling caused by gluten formation of wheat flour, and mellow mouthfeel were imparted.

In addition, in examples, and particularly, Examples 1 to 3, it was found that the smell unique to polysaccharide konnyaku was masked and a rich flavor derived from grains such as wheat flour pasta was imparted.

In addition to these effects, it was found that a noodle-like food product with high satisfaction during eating was obtained comprehensively.

In addition, as another effect, a desired noodle-like food product was obtained even if egg that was generally used as a material for combining noodles was not combined in the examples, and it was not necessary to use egg in the present disclosure.

### (Test Example 2) Taste test according to addition of pasta sauce

The noodle-like food products of Examples 1 to 7 and Comparative Example 1 were placed in a dish, and a commercially available pasta sauce was applied thereto and consumed. As a result, when the noodle-like food product of Comparative Example 1 was consumed, a flavor of the pasta sauce gradually became watery. This is thought to have been caused by the fact that water derived from konnyaku in the noodle-like food product gradually migrates into the pasta sauce. On the other hand, no such a phenomenon was observed in the noodle-like food products of the examples, and a flavor of the pasta sauce was maintained without change over time.

### [Industrial Applicability]

The noodle-like food product of the present disclosure can replace noodles such as pasta made from conventional wheat flour as a raw material. Moreover, since the noodle-like food product has a stiff texture and a rich flavor, satisfaction is obtained. In the noodle-like food product, the smell unique to konnyaku as a raw material is masked, and dilution of a sauce due to migration of water from noodle strands is reduced. The development of the low-calorie noodle-like food product having a texture comparable to that of noodles made from such wheat flour as a raw material has a great social significance because it can provide broader selections of food products for women who care about dieting, people who need carbohydrate intake restrictions, elderly people, the growing number of vegetarians and vegans, and foreigners who need intake restrictions and can provide enjoyment and pleasure in a meal.

## Claims

1. A noodle-like food product in which at least noodle strands are formed by a thermally irreversible polysaccharide gel,
wherein insoluble dietary fibers and a soy milk cream are contained in the noodle strands.

2. The noodle-like food product according to claim 1,
wherein a lipid/protein ratio of the soy milk cream is 1 or more in terms of mass.

3. The noodle-like food product according to claim 2,
wherein a raw material of the thermally irreversible polysaccharide gel is konnyaku or glucomannan.

4. The noodle-like food product according to claim 3,
wherein the insoluble dietary fibers are okara.

5. The noodle-like food product according to claim 4,
wherein the noodle-like food product is a pasta-like food product.

6. A method of manufacturing a noodle-like food product comprising:
a) a process of mixing together polysaccharides which form a thermally irreversible gel, a soy milk cream, insoluble dietary fibers and water;
b) a process of mixing the mixture and an alkali to form a coagulated product;
c) a process of molding the coagulated product to form noodle strands; and
d) a process of boiling the noodle strands to form a thermally irreversible polysaccharide gel.

7. The method of manufacturing a noodle-like food product according to claim 6,
wherein a mixing ratio between the insoluble dietary fibers and the polysaccharides is 1:99 to 20:80 in terms of mass.

8. The method of manufacturing a noodle-like food product according to claim 7,
wherein the process a) is performed by a process of mixing in the insoluble dietary fibers after the polysaccharides, the soy milk cream and the water are mixed together and become a jelly-like mixture.

9. The method of manufacturing a noodle-like food product according to claim 8, wherein the noodle strands are colored to a yellowish color through coloring processing into pasta forms.

10. The method of manufacturing a noodle-like food product according to claim 7,
wherein the noodle-like food product is of a chilled type obtained by providing a process of frying the noodle strands using oil after the d) process.

11. The method of manufacturing a noodle-like food product according to claim 7,
wherein the noodle-like food product is of a chilled type obtained by providing a process of washing with water and additionally performing frying after the noodle strands are fried using oil after the d) process.

12. The method of manufacturing a noodle-like food product according to claim 7,
wherein the noodle-like food product is of a frozen type obtained by providing a process of freezing the noodle strands after the d) process.
